# EUROPEAN PATENT APPLICATION

(11) **EP 3 309 744 A1**
(43) Date of publication of application: **18.04.2018**
(21) Application number: 16193578.8
(22) Date of filing: 12.10.2016
(51) Int. Cl.: G06T 7/10, G06T 9/20

(54) **IMAGE PROCESSING SYSTEM AND IMAGE PROCESSING METHOD FOR PROCESSING IMAGE DATA OF AT LEAST ONE IMAGE FRAME**

(71) Applicant: ASC D.O.O., 1000 Ljubljana (SI)
(72) Inventor: KEJZAR, Uros, Sl-1290, Grosuplje (SI)
(74) Representative: Schaumburg und Partner Patentanwälte mbB

(57) **Abstract**

An image processing system (10) comprises an image input device (12), an image compression device (14), and an image decompression device (16). The image compression device (14) comprises an anchor information determination unit (22a) for determining at least one anchor information by sampling pixels of at least one individual line (104a) of the at least one image frame (100a). The anchor information determination unit (22a) is configured to sample the pixels of the at least one individual line (104a) by using a first sampling resolution. The anchor information determination unit (22a) is configured to determine at least one pair of successive pixels (106a, 106b) sampled with the first sampling resolution for which a difference of level values is equal to or exceeds a predetermined threshold (108). The anchor information determination unit (22a) is configured to sample the pixels of the at least one individual line (104a) in an intermediate sampling region (108a) between the pixels of the at least one pair of successive pixels (106a, 106b) sampled with the first sampling resolution by using a second sampling resolution. The second sampling resolution is higher than the first sampling resolution. The anchor information determination unit (22a) is configured to determine the at least one anchor information based on pixels sampled in the intermediate sampling region (108a) with the second sampling resolution. The compressed image data comprises the at least one anchor information. The at least one anchor information comprises a position information, wherein the position information indicates a position of a pixel (110a) in the at least one individual line (104a) where a change of level values of two successive pixels sampled in the intermediate sampling region (108a) with the second sampling resolution is largest.

## Description

The invention relates to an image processing system for processing image data of at least one image frame. Further, the invention relates to an image processing method for processing image data of at least one image frame. The image data of the at least one image frame comprises a plurality of pixels arranged in a two-dimensional array.

Video and picture compression is an important field that is targeted by many companies and institutions. New codecs are introduced almost on a daily basis, to achieve minor improvements either in picture quality, bandwidth or CPU performance. The huge amount of data that is created and has to be stored demands increasingly higher capacity of the equipment responsible for the storage. Video and pictorial data are contributing a majority of this data inflow, and therefore different technologies (increasing storage capacity, processing and transmission capabilities, data manipulation, data compression, etc.) are needed to provide necessary capabilities. Video and still image compression technologies allow higher density of the stored data, but usually at the cost of lower quality and higher processing power needs. Equally, the amount of data that has to be transferred from one device to another is large and increasing.

Thus, a general problem of known image compression technologies is that the same are associated with a comparatively low image quality and a comparatively high processing power requirement.

From document US 8,243,340 B2, a pre-processing stage or a mechanism for enhancing data compression of an image by splitting or separating the color channels for pixels into planar data sources is known.

It is an object of the invention to specify a concept for processing image data of at least one image frame allowing for an efficient implementation while maintaining the image quality.

This object is solved by an image processing system having the features of claim 1 and by an image processing method having the features of claim 15. Advantageous developments of the invention are specified in the dependent claims.

According to an embodiment, an image processing system for processing image data of at least one image frame is provided. The image data of the at least one image frame comprises a plurality of pixels arranged in a two-dimensional array. The image processing system comprises an image input device for providing the image data of the at least one image frame, an image compression device for compressing the image data of the at least one image frame to obtain compressed image data, and an image decompression device for decompressing the compressed image data to obtain decompressed image data. The image compression device comprises an anchor information determination unit for determining at least one anchor information by sampling pixels of at least one individual line of the at least one image frame. The anchor information determination unit is configured to sample the pixels of the at least one individual line by using a first sampling resolution. The anchor information determination unit is configured to determine at least one pair of successive pixels sampled with the first sampling resolution for which a difference of level values is equal to or exceeds a predetermined threshold. The anchor information determination unit is configured to sample the pixels of the at least one individual line in an intermediate sampling region between the pixels of the at least one pair of successive pixels sampled with the first sampling resolution by using a second sampling resolution. The second sampling resolution is higher than the first sampling resolution. The anchor information determination unit is configured to determine the at least one anchor information based on pixels sampled in the intermediate sampling region with the second sampling resolution. The compressed image data comprises the at least one anchor information. The at least one anchor information comprises a position information, wherein the position information indicates a position (i.e. anchor position) of a pixel in the at least one individual line where a change of level values of two successive pixels sampled in the intermediate sampling region with the second sampling resolution is largest. In this way, a high processing power requirement resulting from an undifferentiated processing of the image data of an image frame can be avoided and thus the processing will be more efficient while substantially maintaining the image quality.

Preferably, the at least one anchor information comprises a level information (e.g. level or color values) to the left and right side of the anchor position. Further, the anchor information may also correspond to a pixel of a frame or line border which does not have to be determined, but is previously known.

Preferably, the anchor information determination unit is configured to determine at least a first anchor information and a second anchor information. The first anchor information and the second anchor information are associated with a first individual line of the at least one image frame. The first anchor information and the second anchor information define an intermediate compression region to be represented in a coded representation. Thus, the intermediate compression region can be easily and precisely defined.

Preferably, the image compression device is configured for determining at least a prediction of a third anchor information and a prediction of a fourth anchor information. The third anchor information and the further anchor information are associated with a second individual line of the at least one image frame. The image compression device is configured to determine the prediction of the third anchor information based on the first anchor information. The image compression device is configured to determine the prediction of the fourth anchor information based on the second anchor information. The image compression device is configured to determine the third anchor information by probing a first probe region of the second individual line of the at least one image frame. The first probe region is based on the prediction of the third anchor information. The image compression device is configured to determine the fourth anchor information by probing a second probe region of the second individual line of the at least one image frame. The second probe region is based on the prediction of the fourth anchor information. Thus, it is possible to predict and efficiently determine the at least one anchor information.

Preferably, the third anchor information and the fourth anchor information define a further intermediate compression region to be represented in a coded representation. Thus, the further intermediate compression region can be easily and precisely defined.

Preferably, the image compression device is configured to successively increase a size of the first probe region and a size of the second probe region. The size of the first probe region and the size of the second probe region each corresponds to a successively increasing predetermined number of pixels. The predetermined number of pixels is a user-adjustable image compression parameter. Thus, the determination of the at least one anchor information can be performed in dependence on a user-adjustable image compression parameter selected by a user.

Preferably, the image compression device is configured to successively increase the size of the first probe region and the size of the second probe region a predetermined number of times. The predetermined number of times is a further user-adjustable image compression parameter. Thus, the determination of the at least one anchor information can be performed in dependence on a further user-adjustable image compression parameter selected by the user.

Preferably, the image compression device is configured for determining at least a prediction of a fifth anchor information and a prediction of a sixth anchor information. The fifth anchor information and the sixth anchor information are associated with a third individual line of the at least one image frame. The image compression device is configured to determine the prediction of the fifth anchor information based on the first anchor information and the third anchor information. The image compression device is configured to determine the prediction of the sixth anchor information based on the second anchor information and the fourth anchor information. Thus, it is possible to predict the at least one anchor information on the basis of at least two previously determined anchor information.

Preferably, the image compression device is configured to determine a first prediction rule based on a change from the first anchor information to the third anchor information. The image compression device is configured to determine a second prediction rule based on a change from the second anchor information to the fourth anchor information. The image compression device is configured to determine the prediction of the fifth anchor information based on the first prediction rule. The image compression device is configured to determine the prediction of the sixth anchor information based on the second prediction rule. Thus, the prediction of the at least one anchor information can be performed in dependence on a prediction rule, e.g. a gradient information.

It is advantageous when the image compression device further comprises an intermediate compression region analyzing unit for analyzing the intermediate compression region and/or the further intermediate compression region to obtain a statistical representation of the intermediate compression region and/or the further intermediate compression region.

Further, it is advantageous when the image compression device is configured to determine a linear representation of the intermediate compression region based on the first anchor information and the second anchor information, and/or when the image compression device is configured to determine a linear representation of the further intermediate compression region based on the third anchor information and the fourth anchor information.

Preferably, the anchor information determination unit is configured to determine the at least one anchor information in dependence on a user-adjustable image compression parameter. The user-adjustable image compression parameter comprises the first sampling resolution, the second sampling resolution or the predetermined threshold. Thus, it is possible to determine the at least one anchor information in dependence on a plurality of different user-adjustable image compression parameters, one of which is selected by the user.

It is advantageous when the image compression device further comprises a further anchor information determination unit for determining at least one additional anchor information by blockwise scanning pixels of successive individual lines of the at least one image frame. Each block of pixels associated with the successive individual lines has a same block size. A first block of pixels associated with a first individual line of the at least one image frame and a second block of pixels associated with a second individual line of the at least one image frame are shifted with respect to each other by a predetermined number of pixels corresponding to the block size. This allows to efficiently determine an additional anchor information that is not determined when using a prediction rule.

Preferably, the block size of each block of pixels is a user-adjustable image compression parameter. Thus, the determination of the at least one additional anchor information can be performed in dependence on a user-adjustable image compression parameter selected by the user.

It is advantageous when the image compression device is configured for obtaining a bitstream representing the image data of the at least one image frame, wherein the at least one anchor information is encoded within the bitstream.

Further, it is advantageous when the image decompression device is configured for reconstructing the image data of the at least one image frame in dependence on the at least one anchor information provided within the compressed image data.

Preferably, the anchor information determination unit is configured for determining the at least one anchor information by sampling pixels of a plurality of individual lines of the at least one image frame, wherein the plurality of individual lines are horizontal or vertical lines.

Preferably, the image processing system is configured for processing image data of a single image frame or a stream of image frames.

According to an embodiment, an image processing method for processing image data of at least one image frame is provided. The image data of the at least one image frame comprises a plurality of pixels arranged in a two-dimensional array. The image processing method comprises providing the image data of the at least one image frame, compressing the image data of the at least one image frame to obtain compressed image data, and decompressing the compressed image data to obtain decompressed image data. Compressing the image data of the at least one image frame comprises determining at least one anchor information by sampling pixels of at least one individual line of the at least one image frame. Determining the at least one anchor information comprises sampling the pixels of the at least one individual line by using a first sampling resolution. Determining the at least one anchor information comprises determining at least one pair of successive pixels sampled with the first sampling resolution for which a difference of level values is equal to or exceeds a predetermined threshold. Determining the at least one anchor information comprises sampling the pixels of the at least one individual line in an intermediate sampling region between the pixels of the at least one pair of successive pixels sampled with the first sampling resolution by using a second sampling resolution, wherein the second sampling resolution is higher than the first sampling resolution. Determining the at least one anchor information comprises determining the at least one anchor information based on pixels sampled in the intermediate sampling region with the second sampling resolution. The compressed image data comprises the at least one anchor information. The at least one anchor information comprises a position information, wherein the position information indicates a position of a pixel in the at least one individual line where a change of level values of two successive pixels sampled in the intermediate sampling region with the second sampling resolution is largest.

Preferably, sampling by using the first sampling resolution corresponds to sampling each nth pixel of the at least one individual line, while sampling by using the second sampling resolution corresponds to sampling each mth pixel of the at least one individual line in the sampling region. Here, n is larger than m.

For example, sampling by using the first sampling resolution corresponds to sampling each 10th pixel of the at least one individual line, while sampling by using the second sampling resolution corresponds to sampling each pixel of the at least one individual line in the sampling region.

Further features and advantages of the invention result from the following description which explains the invention in more detail on the basis of embodiments in connection with the enclosed Figures.
- Fig.1: shows a schematic illustration of an embodiment of an image processing system for processing image data of at least one image frame;
- Fig.2a: shows a block diagram of an implementation of an image compression device of Fig.1;
- Fig.2b: shows a block diagram of a core component of the image compression device of Fig.1 comprising an anchor information determination unit for determining at least one anchor information;
- Fig.3: shows a block diagram of an implementation of an image decompression device of Fig.1;
- Fig.4: shows a schematic illustration of a scheme for determining the at least one anchor information performed with an accelerated anchor detection;
- Fig.5: shows a schematic illustration of a scheme for processing image data of at least one image frame performed with an edge progression;
- Fig.6: shows a schematic illustration of a further image data processing scheme performed with a logical edge progression;
- Fig.7: shows a schematic illustration of a further image data processing scheme performed with a partial line reanalysis;
- Fig.8: shows a schematic illustration of a further image data processing scheme performed with a video anchor scheduler;
- Fig.9: shows a schematic illustration of a further image data processing scheme performed with an out of schedule partial line reanalysis;
- Fig.10: shows a schematic illustration of a further image data processing scheme performed with a retroactive edge reconstruction;
- Fig.11: shows a schematic illustration of the parts of a picture (i.e. image frame) that can be left out of analysis due to the inventive concept;
- Fig.12: shows a schematic illustration of a further image data processing scheme performed with an area analyzer;
- Fig.13: shows a schematic illustration of a further image data processing scheme performed with a retroactive area merger;
- Fig.14: shows a schematic illustration of a picture being described by anchors and areas/regions in between;
- Fig.15: shows an example of a four bit script used to describe the compressed image data;
- Figs.16a, b: show a schematic illustration of a further image data processing scheme for processing image data of two successive image frames performed with an inter-frame edge progression; and
- Fig.17: shows a schematic illustration of a further image data processing scheme performed with a low luminance object enhancer.

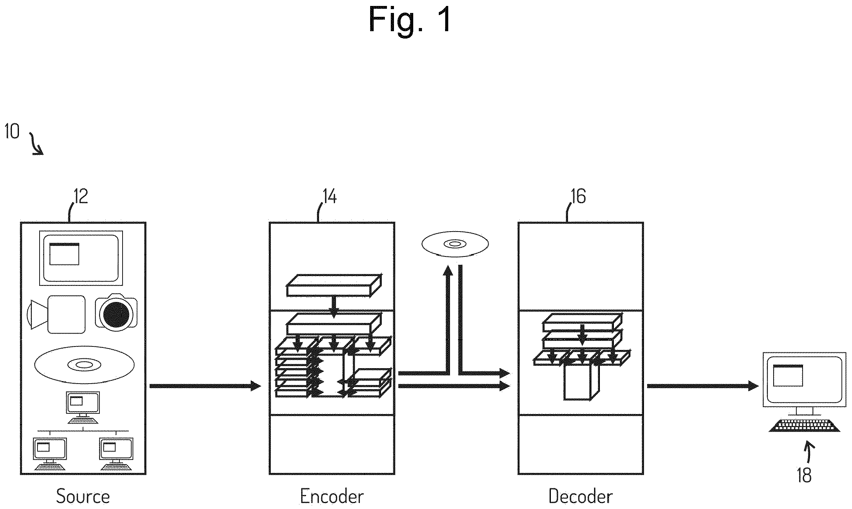

Fig.1 shows a schematic illustration of an embodiment of an image processing system 10 for processing image data of at least one image frame. The image processing system 10 comprises an image input device 12, an image compression device 14, and an image decompression device 16. The image input device 12 is configured for providing image data of at least one image frame. The image compression device 14 is configured for compressing the image data of the at least one image frame to obtain compressed image data. The image decompression device 16 is configured for decompressing the compressed image data to obtain decompressed image data. For example, the decompressed image data is provided for a display unit 18.

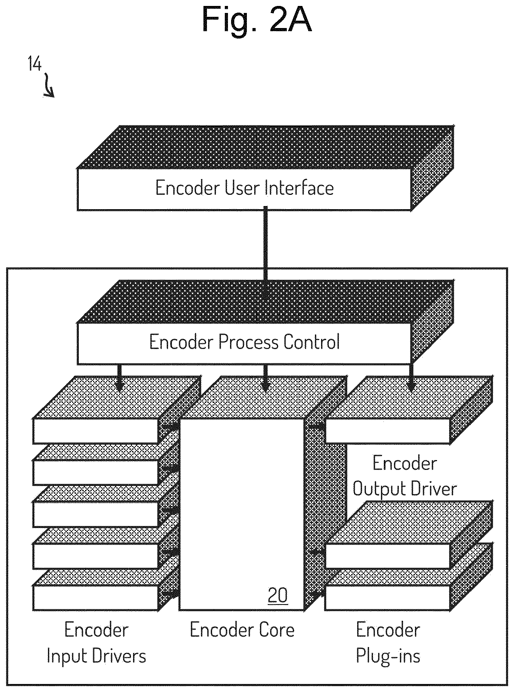

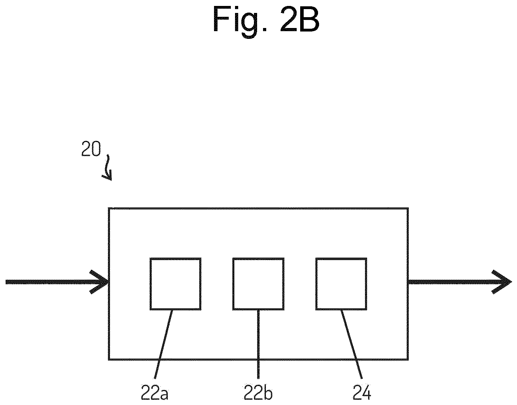

Fig.2a shows a block diagram of an implementation of an image compression device 14 of Fig.1. The image compression device 14 comprises a core component 20, i.e. an encoder core, and other encoder components. Fig.2b shows a block diagram of the core component 20 of the image compression device 14 of Fig.1 comprising an anchor information determination unit 22a for determining at least one anchor information. For example, the core component 20 additionally comprises a further anchor information determination unit 22b and/or an intermediate compression region analyzing unit 24.

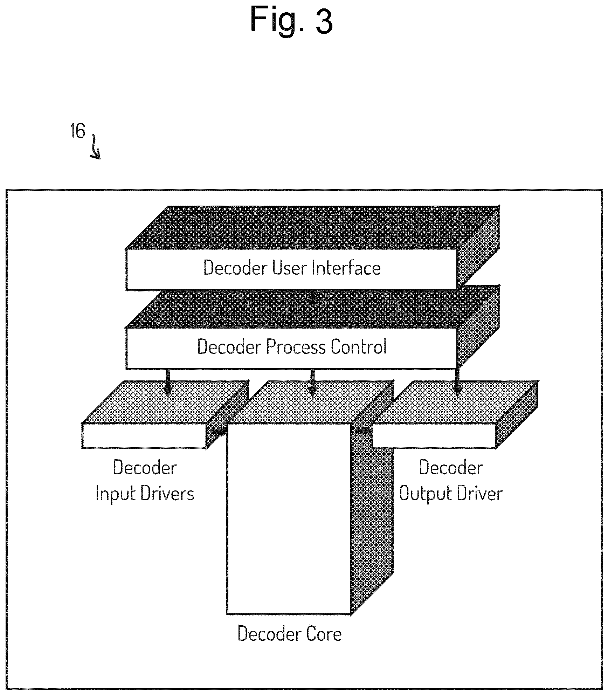

Fig.3 shows a block diagram of an implementation of an image decompression device 16 of Fig.1. The image decompression device 16 comprises a core component, i.e. a decoder core, and other decoder components.

Referring to Figs.1 to 3, the image processing system 10 comprises an encoder 14 for transforming an input into compressed data and a decoder 16 for transforming the compressed data into decompressed data.

Each application, encoder and decoder are divided into four components each running in its own thread or group of threads, which will be described individually for encoder and decoder.

One of the most important features of the encoder is its low processing power requirement, which is very important for space based applications. This means low memory footprint and fast operation. To achieve that goal, several purpose built encoders are built for different applications. In most of cases the encoder is compact, small and performing only operations required. Selected functions are embedded during compile time, so no processing power is lost during encoding operation.

Referring to Fig. 2a, the encoder consists of the following four components:
1. process control and user interface,
2. input driver (transforms data from the input source into an internal format),
3. encoder core with plug-ins (performs the actual compression) and
4. output driver (moves the coded data to the output medium - like write to file, stream, etc).

The decoder on the other hand should be able to read as many of the encoded formats as possible. To allow downwards compatibility, each acceptable version needs to have all functions necessary to reproduce the data from any previous version of the encoder. To allow at least partial upwards compatibility, every version upgrade in technology is done in a standardization like procedure.

Referring to Fig.3, the decoder consists of four components:
1. process control and user interface,
2. input driver (transforms coded data into an internal format),
3. decoder core with plug-ins (performs the actual decompression) and
4. output driver (usually just synchronization and fitting to the screen).

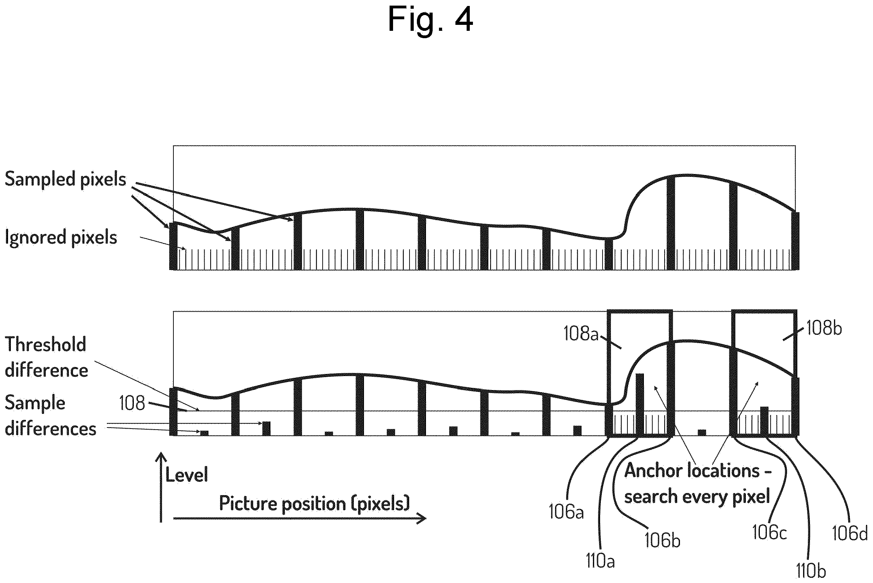

Fig.4 shows a schematic illustration of a scheme for determining the at least one anchor information performed with an accelerated anchor detection. In this scheme, the anchor information determination unit 22a determines at least one anchor information by sampling pixels of at least one individual line of the at least one image frame. As shown in the top panel of Fig.4, the anchor information determination unit 22a samples the pixels of the at least one individual line by using a first sampling resolution. As shown in the bottom panel of Fig.4, the anchor information determination unit 22a determines a first pair of successive pixels 106a, 106b and a second pair of successive pixels 106c, 106d sampled with the first sampling resolution for which a difference of level values is equal or exceeds a predetermined threshold 108. Then, the anchor information determination unit 22a samples the pixels of the at least one individual line in a first intermediate sampling region 108a between the pixels of the first pair of successive pixels 106a, 106b and in a second intermediate sampling region 108b between the pixels of the second pair of successive pixels 106c, 106d sampled with the first sampling resolution by using a second sampling resolution. The second sampling resolution is higher than the first sampling resolution. Then, the anchor information determination unit 22a determines a first anchor information based on pixels sampled in the first intermediate sampling region 108a with the second sampling resolution and a second anchor information based on pixels sampled in the second intermediate sampling region 108b with the second sampling resolution. Referring to the bottom panel of Fig.4, the first and second anchor information comprises a position information, wherein the position information indicates a position of a first pixel 110a and a position of a second pixel 110b in the at least one individual line where a change of level values of two successive pixels sampled in the first and second intermediate sampling region 108a, 108b with the second sampling resolution is largest. The first and second anchor information is provided within the compressed image data.

The method of Fig.4 is used in lines, where methods for predicting anchor positions from previous anchors cannot be used, like in the first line or after a drastic change of scene. The method actually only scans each n-th pixel of the line, where n is higher with higher picture size, but can be user-selected as one of the compression quality parameters. Where a difference in change between samples exceeds the threshold (which can be set by the user as one of the compression quality parameters), all the pixels between are probed, so that the exact position of fastest change is found. This position is called an anchor and determines the limit between regions on each side of it that are each compressed individually.

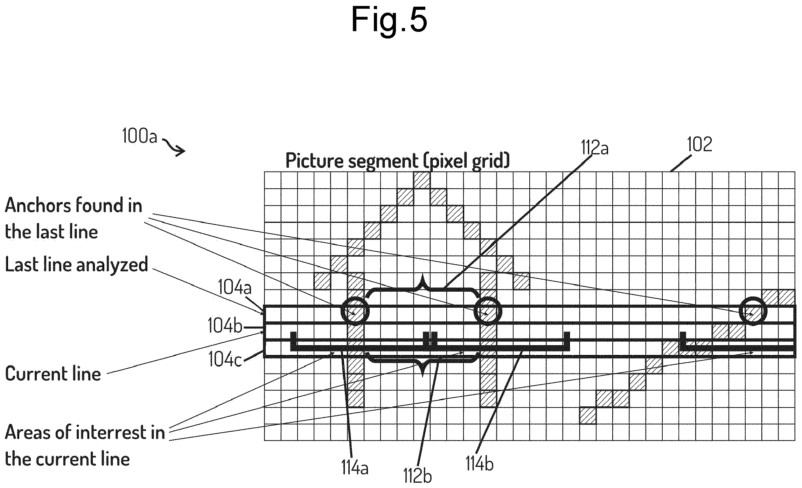

Fig.5 shows a schematic illustration of a scheme for processing image data of at least one image frame 100a performed with an edge progression. In this scheme, the anchor information determination unit 22a determines at least a first anchor information and a second anchor information. The first anchor information and the second anchor information are associated with a first individual line 104a of the image frame 100a. As shown in Fig.5, the first anchor information and the second anchor information define an intermediate compression region 112a to be represented in a coded representation.

Referring to Fig.5, the first individual line 104a of the image frame 100a may correspond to a first line to be analyzed. This first line to be analyzed may be any line of pixels arranged in the two-dimensional array 102 shown in Fig.5. The anchor information associated with this first line to be analyzed may be determined from an analysis as described before, or is otherwise predetermined.

Then, the image compression device 14 predicts a third and fourth anchor information associated with a second individual line 104b of the image frame 100a and determines the third and fourth anchor information by probing a first and second probe region 114a, 114b of the second individual line 104b of the image frame 100a. The first and second probe region 114a, 114b are determined by the predicted third and fourth anchor information, respectively. For example, the predicted third and fourth anchor information correspond to pixels lying perpendicularly below pixels corresponding to the previously determined first and second anchor information. Further, the third and fourth anchor information define a further intermediate compression region 112b to be represented in a coded representation.

Similarly, a fifth and sixth anchor information associated with a third individual line 104c of the image frame 100a can be predicted by using a prediction rule determined by a change from the first to the third anchor information or by a change from the second to the fourth anchor information. Further, based on the predicted fifth and sixth anchor information, the actual fifth and sixth anchor information can be determined. For example, the prediction rules correspond to gradient information indicating a change of pixel position indicated by previously determined anchor information.

The method of Fig.5 predicts the position of the anchors in each successive line. The logical nature of all pictures imply that most picture elements are divided by edges that follow simple rules. Therefore, the close relation of an anchor with the edge means that a majority of anchors have their continuation in the next line that is located not far from the anchor in the previous line. The method of Fig.5 allows searching for anchors on only a part instead of the whole line and thus allows reducing the necessary CPU power.

For example, the method compares only four points (two to left, two to right) in the successive line (line currently analyzed) right under the anchor, with an expected pattern caused by the anchor in lines that were analyzed so far. If a suitable pattern is found, the changes in anchor position as well as chromatic changes compared to the previous line are calculated and marked. If a suitable pattern is not found, the search is widened by two pixels on each side of the already probed. The number of such search region widening iterations is user-definable as one of the compression speed parameters. If no suitable anchor is found, the regions that should be divided by it are now merged and the part of line where is now "missing" anchor information is marked for "Out of Schedule Partial Line Reanalysis".

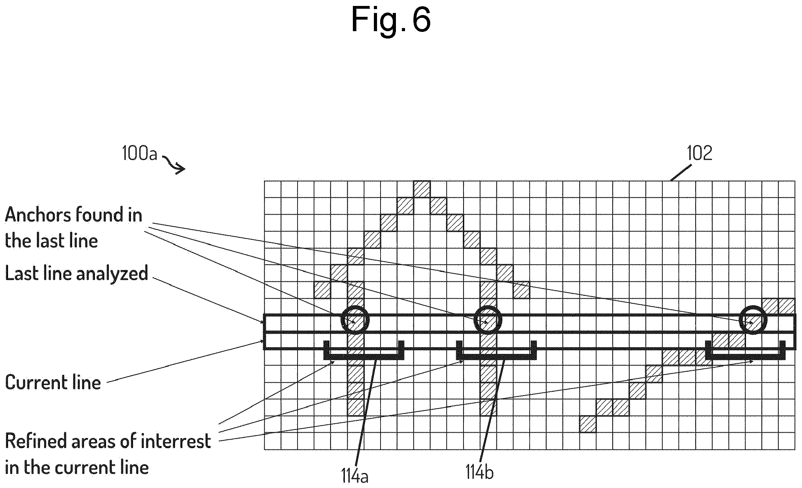

Fig.6 shows a schematic illustration of a further image data processing scheme performed with a logical edge progression. This method only guides the previously described method ("Edge Progression") to be able to find the anchors faster. The method makes the "Edge Progression" methods look for the anchor positions in a slightly changed way. This means that when at least two anchors in two successive lines were found, it is likely that the next anchor will not lie directly under the last anchor, but will rather be separated from the previous one as much as the previous is from the one before it.

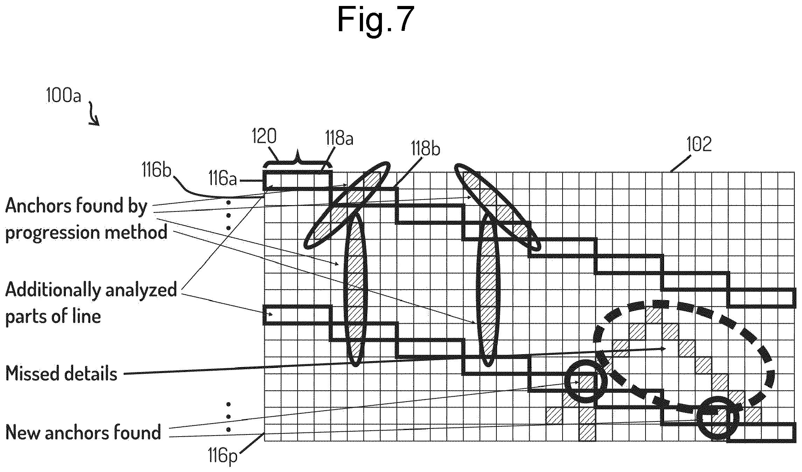

Fig.7 shows a schematic illustration of a further image data processing scheme performed with a partial line reanalysis. In this scheme, the further anchor information determination unit 22b determines at least one additional anchor information by blockwise scanning pixels of successive individual lines 116a to 116p of the image frame 100a. Each block of pixels associated with the successive individual lines 116a to 116p has a same block size 120. As shown in Fig.7, a first block of pixels 118a associated with a first individual line 116a of the image frame 100a and a second block of pixels 118b associated with a second individual line 116b of the image frame 100a are shifted with respect to each other by a predetermined number of pixels corresponding to the block size 120. For example, the block size 120 of each block of pixels is a user-adjustable image compression parameter. Further, the block size 120 of each block of pixels may correspond to the exemplary ratios 1/4, 1/8, 1/16, 1/32, or 1/64 of the total number of pixels of each of the successive individual lines 116a to 116p. However, the use of different block sizes corresponding to other ratios is also possible.

The "Edge Progression" methods only work on anchors that are already encountered during the analysis of the previous lines. It is however possible that new anchors are missed because of such an operation. Thus, "Partial Line Reanalysis" is a method that finds such additional anchors. It scans a part of each line (e.g. 1/4, 1/8, 1/16, 1/32 or 1/64, depending on the user-selectable quality parameter). Each line is separated into parts and one such part is analyzed. In the next line position is shifted and so on. When a new anchor is found by this method, it is in case of video encoding marked internally for a "Video Anchor Scheduler".

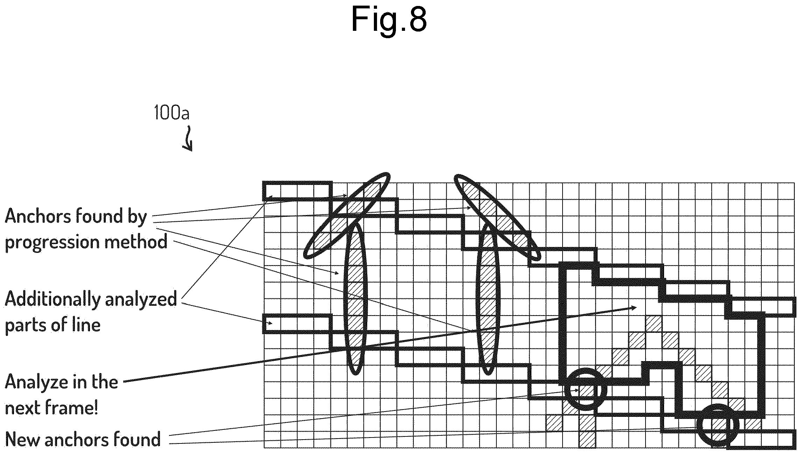

Fig.8 shows a schematic illustration of a further image data processing scheme performed with a video anchor scheduler. This is a method that is used only when a new anchor is found and regions of interest in previous lines (where the actual origin of this anchor should be located) were not analyzed. This method actually waits for the next line of "Edge Progression" method for the anchor in question. According to the position shift of this anchor, this method calculates the most probable region for the initial appearance of the anchor. This region is marked for "Out of Schedule Partial Line Reanalysis" in the next frame, so the anchors can be predicted according to previous frames in case of a video stream.

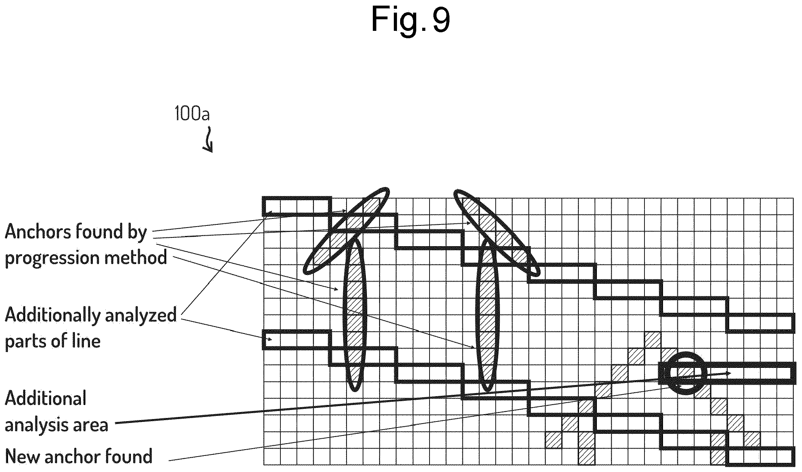

Fig.9 shows a schematic illustration of a further image data processing scheme performed with an out of schedule partial line reanalysis. This is a method that does the same search for anchors as is done in "Partial Line Reanalysis", but unlike "Partial Line Reanalysis", which scans only predetermined parts of the screen following a pattern, the method described here examines a part of line that has been recognized as interesting by some other method.

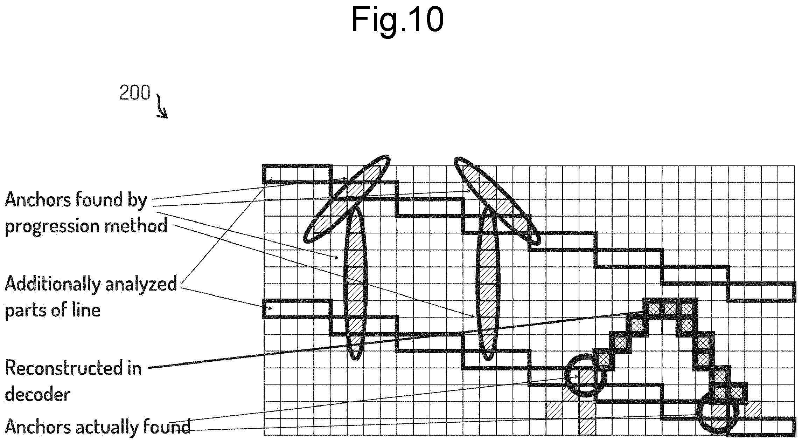

Fig.10 shows a schematic illustration of a further image data processing scheme performed with a retroactive edge reconstruction. If additional anchors are found during "Partial Line Reanalysis" and the anchors in following lines follow predictable rules of an edge (e.g. constant or near constant change in position of next anchors), the same values are applied for the previous line in the decoder part, to reconstruct/predict the shape that actually has never been analyzed.

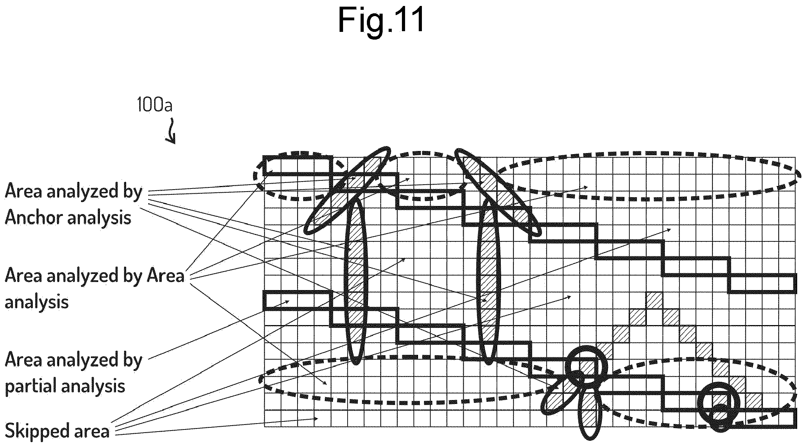

Fig.11 shows a schematic illustration of the parts of a picture (i.e. image frame) that can be left out of analysis due to the inventive concept. This method is a direct consequence of the previously described methods ("Edge Progression" methods), but is actually the reason why these methods are used. "Edge Progression" methods allow that only part of each line than enters the encoder is actually analyzed. "Edge progression" methods actually filter out less sensitive data from the picture even before the picture is actually completely analyzed. This reduces the amount of information coming into encoder lowering processing time and increasing the compression level.

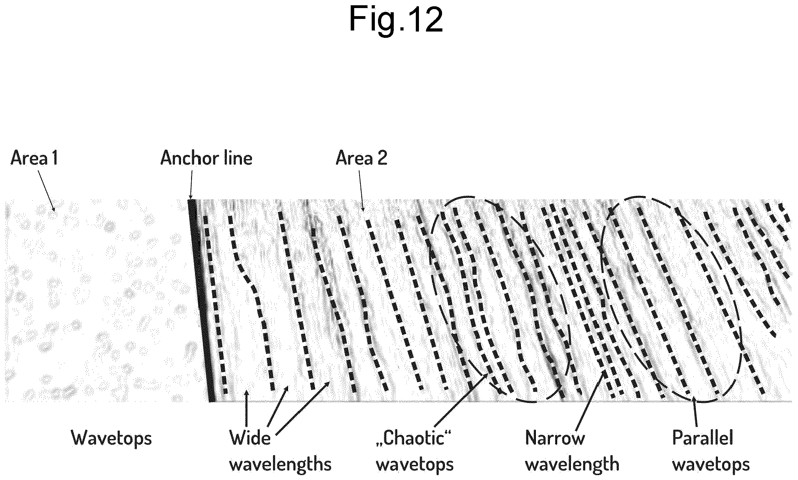

Fig.12 shows a schematic illustration of a further image data processing scheme performed with an area analyzer. The area analyzer corresponds to the intermediate compression region analyzing unit 24 shown in Fig.2b. The area analyzer (or intermediate compression region analyzing unit 24) analyzes the intermediate compression region 112a and/or the further intermediate compression region 112b shown in Fig.5 to obtain a statistical representation of the same.

This method analyzes the area/region between two adjacent anchors to find a statistic approximation of that area/region. Each single line is described by the following parameters:
- Average wavelength (average distance between two maximum values),
- Average amplitude (average amplitude between local minimum and maximum),
- Wavelength variability (variability in distance between local peaks),
- Amplitude variability (variability in prominence of local peaks).

Other statistical parameters that describe the shape of the function for the statistic approximation can also be used.

There are two other parameters that are not written in the area description, but are taken from the bordering anchors. These two values determine the average level and level slope.

The next line in the area can also be defined as a consequence and continuation of the previous line as a statistic amount of peaks shifting position or varying in color from line to line.

An area of wood with a surface showing lines or waves as their grain structure is one example of an area that can be easily and effectively described by statistic area analysis, but the same principles apply to many other surface types. The example procedure is as follows:
- In the first line an irregular sinusoidal pattern is discovered with lighter and darker regions alternating.
- Next lines are compared to the first one, by measuring the difference of the actual line from the one generated from the previous line data. This shows if the wavetops (growth lines in this case) are parallel or chaotic, and how much, as well as if there is some chaotic change of color and if the wavetops are oriented differently than the area (as defined by anchors).

- If a parameter that has already been written, is written again in one of the following lines, only the new value is used after it has been introduced.
- If a parameter that has not been written before is written, every other parameter is still in effect.
- In each line analyzed, the apparatus evaluates the level of completeness (i.e. possibility, that all necessary statistic information is already found and written).
- Once the level of completeness is high enough, new lines are no longer completely analyzed, but just in the manner of "Partial Line Analysis" to enable "Stream Skipping". This level of completeness limit is user-definable to allow for higher speed or quality.

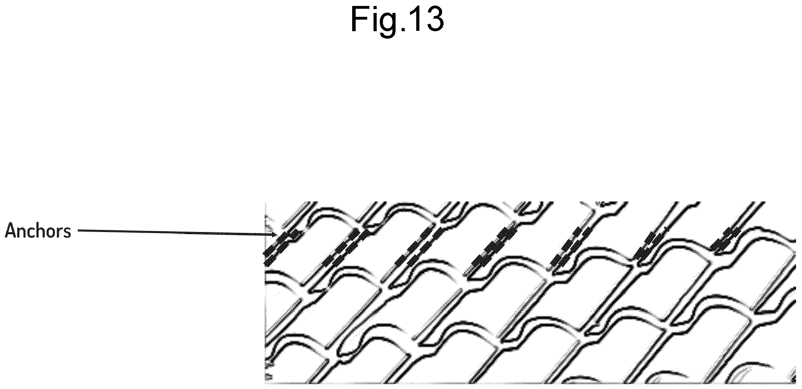

Fig.13 shows a schematic illustration of a further image data processing scheme performed with a retroactive area merger. In this scheme, after the line has been analyzed, the primarily compressed data is fed into the system. The system tries to find the repeating patterns by first comparing distances between anchors and if similarity is found, also the colors. If the pattern has been found, the corresponding anchors and areas are converted into a single area.

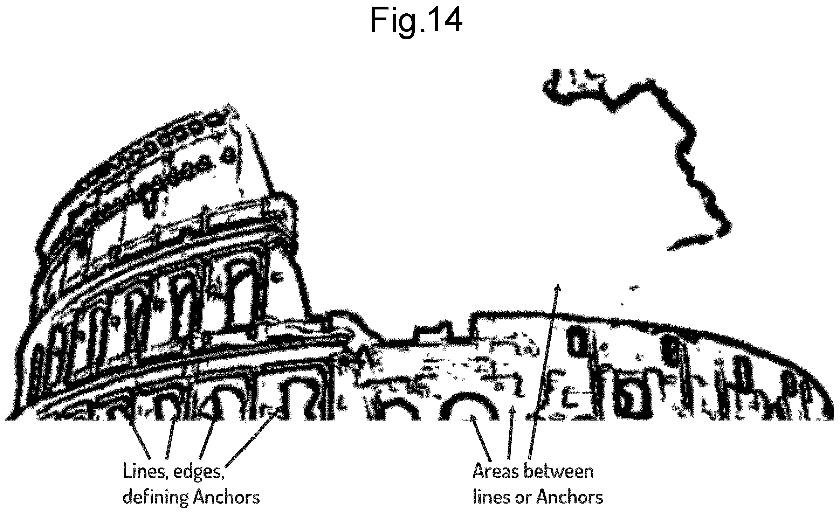

Fig.14 shows a schematic illustration of a picture being described by anchors and areas/regions in between. This is a method that compresses a picture and rebuilds it again by building it, starting from the most prominent points of each line that have been tested. This method enables the picture to be more detailed where necessary and by building it around natural boundaries. This eliminates a blocky appearance encountered using compression methods that divide picture into blocks.

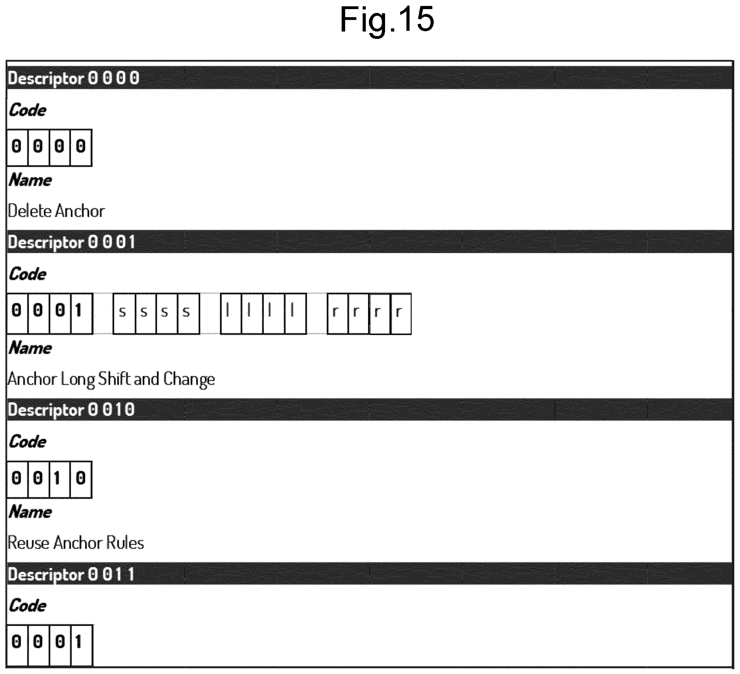

Fig.15 shows an example of a four bit script used to describe the compressed image data. This is a method that enables short notations of the anchor part of the picture elements. This method divides anchors into three classes: "Control Anchors", "New Anchors" and "Chained Anchors".

Control Anchors are anchors that do not describe the contents of the picture, but other control elements like synchronization, version descriptors, etc.

New Anchors are anchors as are found for the first time and can have no previous anchor to be defined by relative values. Thus, they are completely described with 4 Bytes of information (16 bit for position, 8 bit for the left chromatic value and 8 bit for the right chromatic value).

Chained Anchors are anchors that have been found as logical continuation of the anchor or more anchors that is or have already been found in previous lines. There are several rules for such anchor descriptions:
- The memory resolution is in nibbles - each such anchor descriptor has length of 4 bits or a 4*n bits.
- Each anchor descriptor starts with control two bits, determining the length of descriptor and data contained.
- Additional control fields are allowed and are used to create anchor progression descriptions that are less common, but still common enough for such a description.

This in short means that Chained Anchor descriptors vary in length and the information included. Variations are also possible because of version changes.

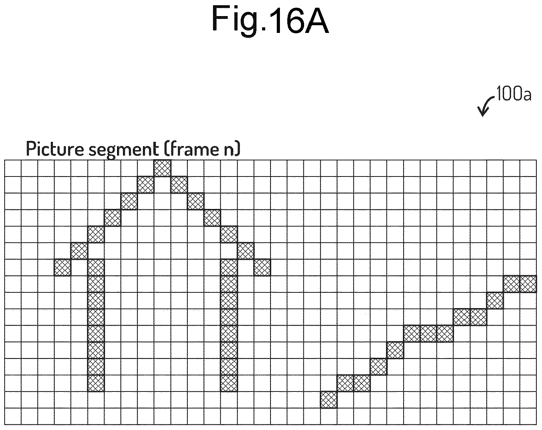

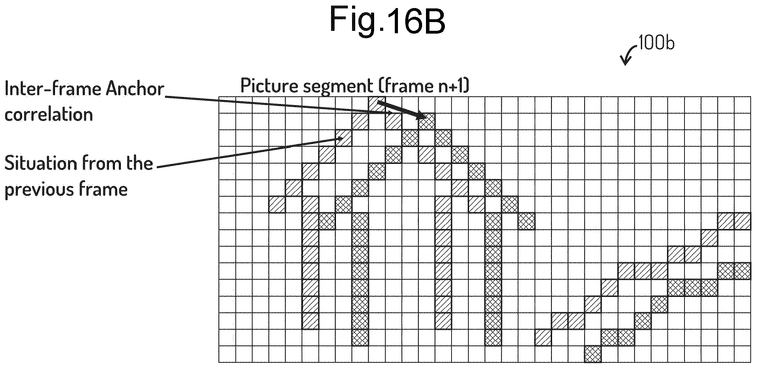

Figs.16a, b show a schematic illustration of a further image data processing scheme for processing image data of two successive image frames 100a, 100b performed with an interframe edge progression. This method expands "Edge Progression" methods that have so far been defined as using logical relation between successive lines to using logical relations between successive frames.

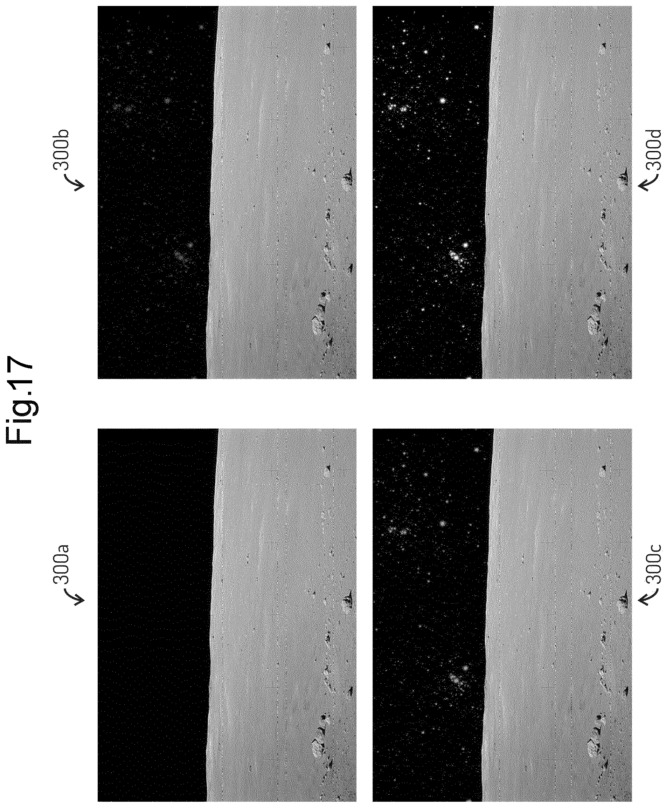

Fig.17 shows a schematic illustration of a further image data processing scheme performed with a low luminance object enhancer. This apparatus prevents the loss of less prominent features of the pictures. A well-known example of this problem is the lack of stars in the lunar pictures because of the high difference of the high brightness of the lunar surface and the low brightness of the stars in the sky. Typically, the known compression methods even exaggerate this problem by removing low brightness stars even with increasing dynamics and sensitivity of modern sensors.

This apparatus requires hardware capable of detecting the low level star signal (high dynamics, additional sensor, etc.). It uses information given from the other methods described above in order to know which region must be analyzed. In this case every pixel in this region is analyzed. Objects detected in this case are described with their position, size, color and brightness. The decoder part allows the user to set the level of brightness of such objects, as illustrated in the different processed images 300a - 300d in Fig.17.

Further features of the image processing system are an "Artificial Pattern Finder" and a "Movement Noise Reduction".

In the "Artificial Pattern Finder", after the line has been analyzed, the primarily compressed data is fed into the system. The system tries to find image features that are significant for artificial objects like for instance letters. These are thin straight lines, but also right angles and small simple areas with straight edges. Such anchors and areas are removed. Instead, artificial shapes are inserted into the compressed data stream. As original graphical representators (anchor and area data) are removed, the picture or video can be shown by the encoder without the artificial objects, with a reconstructed underlying region.

In the "Movement Noise Reduction", the position of all anchors that are recognized between frames is averaged for each such frame. This gives the average position of each such frame. Simple and well-known regulation techniques are used to stabilize such a picture in the decoder, allowing user control of the stabilization level. The other features of this technique allows reconstruction of the border area, thus even the area that falls out of the picture because of movement noise is not lost.

In the above, mainly the process of encoding has been described as the decoding operations are self-evident if encoding is known. The encoding picture analysis is done in horizontal or vertical lines. Several logical parameters of such line are found and used as compressed data. The next line is compared to the previous and often only differences can be used as compressed data.

Embodiments provide the following possibilities:

### (a) Picture Area Segmentation

The core idea of the embodiments lies in the property of any picture and human perception of pictorial information that the picture is the most interesting in places where its changes are the fastest. Therefore, the embodiments need to find such areas. The encoder searches for many points where this change is the fastest. This process is comparable to edge detection, but much faster as it only works in a single dimension and does not need much information on the strength of each edge. The number of anchors used for each line can be adjusted and this is one of the ways to select the level of compression.

### (b) Line and Anchor Hierarchy

The first line of the screen is analyzed in full, while for the next line only points near locations near each anchor from the previous line are fully analyzed, because it is expected that the picture flows smoothly from line to line. If a large discrepancy is discovered, part of line is given full analysis. Anchors in next lines (dependent anchors) are coded only in positional and chromatic difference or as continuation of the trend set in previous dependent anchors.

### (c) New Anchors Sampling

To avoid missing new features that appear in the picture at the "from top to bottom" analysis, the encoder samples parts of each line that otherwise would not be analyzed. If a discrepancy is found, a new anchor is inserted. The frequency of this additional sampling is another way to influence compression quality (with a high frequency meaning a better quality at the expense of lower speed).

### (d) Fast Anchor Detection and Pixel Skipping

Even the fully analyzed lines can be analyzed in a time saving way by only calculating differences of every n-th pixel. Where this difference exceeds the set threshold, the exact anchor position is found.

### (e) Raw Inter-Anchor Regions

In the first approximation, the regions between anchors are represented simply as an area where the color changes linearly between the bordering points, determined by the left and right anchor. This can actually be effective in case of large flat surfaces, but is less than effective in terms of quality and bandwidth in many other cases. The intermediate space is therefore better represented with statistical representators that have been described before.

### (f) Plug-ins

Example Plug-ins are one of the previously described methods that are implemented separately because of one of the following reasons:
- Enhancements are expected during the development and support lifetime.
- Development time is long and the technology can start working before they are finished.
- They enable some functionality to be omitted in some applications thus improving speed.

### (g) Statistical Representators

This actually works in two distinct modes. One mode analyzes the regions between anchors (actually measuring noise) to give soft variations in relatively uniform regions. The other analyzes already set anchors and tries to find repetitive patterns in anchor color and positions. Both statistical representators try to describe a line as a wave with the following parameters: mean value, mean value slope, amplitude, amplitude variation, wavelength, and/or wavelength variation. Other parameters are also possible as is coding with a reduced number of parameters.

The same region in the next line is described in a way of progression, describing how much statistical parameters are off in the next line and how the wavetops and bottoms are related from line to line.

### (h) Logical Patterns

When enbodiments encounter and recognize patterns that are significant for common artificial structures, such as letters, they are represented in this way. Graphical representators that would be present without this logical pattern recognition are removed to reduce the amount of data.

### (i) Retroactive Enhancements

If an analysis of a line shows the possibility of information that has been missed in the analysis of the previous lines (additional sampling found new anchor, etc.), the encoder may analyze a limited space in the previous lines that has been skipped and find out if some information is missing. Limitation of the space prevents too much resources being committed to this task.

Embodiments provide an ideal compression solution which offers a high compression ratio at a high quality and low processing demands. A majority of stored and transferred data benefit from the increased "Picture Quality / Compression Level / Processing Power" ratio. Less storage needed, less processing power needed and a direct and indirect power requirement reduction translate into a substantial cost reduction.

Embodiments allow a much higher compression rate and lower processing power at comparable picture quality.

Embodiments provide the following improvements:
- higher density of stored data, resulting in lower cost and energy needed per stored pixel,
- improved pictorial information from areas where processing, transmission and storage capabilities are limited (space, high radiation environments, miniaturized devices, etc.),
- distributed observation applications (satellite swarms, etc.),
- distributed surveillance applications (redundant security camera systems),
- miniaturized high quality wireless video capture and transmission systems (miniaturized camera and smartphone based HD and higher resolution video recording and transmitting),
- virtual and augmented reality (wireless, miniature and seamless VR and AR devices), etc.

Every compression method is expected to fulfill several demands. Some of these are contradictory, thus the embodiments realize a compromise. Three factors that are always in opposition are speed of operation, picture quality and level of compression. The relation between these factors also applies to the embodiments, but they operate at much higher level.

Embodiments have the following possible applications:
- Space based imaging equipment (Space equipment is limited by weight, but also and even more importantly by lower performance of space radiation resilient hardware. Therefore, one is not able to do high quality compression in real time without the embodiments.)
- Surveillance and security (Embodiments enable less complex devices needing much less power to compress and transmit visual information, therefore enabling better coverage.)
- Recreational applications (Embodiments allow real time high level compression in resolution above HD using existing portable devices, therefore allowing high quality live transmission.)
- Artificial reality and augmented reality (Current artificial and augmented reality applications produce too much video information for portable imaging devices or 3D glasses. Wireless glasses are possible only with the embodiments.)
- High volume picture storage and archiving (Embodiments enable less processing and storage power, therefore enabling cheaper and denser storage of such data.)

Embodiments are related to the following basic concept. Any real life picture has some internal logic. This logic is used to reduce the amount of picture elements analyzed (reducing compression time). Images should be divided in logical segments (reducing blockiness and giving more emphasis on more important picture parts). The decoder should be allowed to "guess" parts of information (increasing compression level). This concept allows very similar work with pictures and video.

According to embodiments, several logical parameters of a line to be analyzed are found and used as compressed data. The next line is compared to the previous and often only differences can be used as compressed data.

Although some aspects have been described in the context of an apparatus or system, it is clear that these aspects also represent a description of the corresponding method, where a block or device corresponds to a method step or a feature of a method step. Analogously, aspects described in the context of a method step also represent a description of a corresponding block or item or feature of a corresponding apparatus or system.

## Claims

1. An image processing system (10) for processing image data of at least one image frame (100a), the image data of the at least one image frame (100a) comprising a plurality of pixels arranged in a two-dimensional array (102), the image processing system (10) comprising:
an image input device (12) for providing the image data of the at least one image frame (100a),
an image compression device (14) for compressing the image data of the at least one image frame (100a) to obtain compressed image data, and
an image decompression device (16) for decompressing the compressed image data to obtain decompressed image data,
**characterized in that** the image compression device (14) comprises an anchor information determination unit (22a) for determining at least one anchor information by sampling pixels of at least one individual line (104a) of the at least one image frame (100a),
wherein the anchor information determination unit (22a) is configured to sample the pixels of the at least one individual line (104a) by using a first sampling resolution,
wherein the anchor information determination unit (22a) is configured to determine at least one pair of successive pixels (106a, 106b) sampled with the first sampling resolution for which a difference of level values is equal to or exceeds a predetermined threshold (108),
wherein the anchor information determination unit (22a) is configured to sample the pixels of the at least one individual line (104a) in an intermediate sampling region (108a) between the pixels of the at least one pair of successive pixels (106a, 106b) sampled with the first sampling resolution by using a second sampling resolution, wherein the second sampling resolution is higher than the first sampling resolution,
wherein the anchor information determination unit (22a) is configured to determine the at least one anchor information based on pixels sampled in the intermediate sampling region (108a) with the second sampling resolution,
wherein the compressed image data comprises the at least one anchor information, and
wherein the at least one anchor information comprises a position information, wherein the position information indicates a position of a pixel (110a) in the at least one individual line (104a) where a change of level values of two successive pixels sampled in the intermediate sampling region (108a) with the second sampling resolution is largest.

2. The image processing system (10) according to claim 1, wherein the anchor information determination unit (22a) is configured to determine at least a first anchor information and a second anchor information, wherein the first anchor information and the second anchor information are associated with a first individual line (104a) of the at least one image frame (100a), and wherein the first anchor information and the second anchor information define an intermediate compression region (112a) to be represented in a coded representation.

3. The image processing system (10) according to claim 2, wherein the image compression device (14) is configured for determining at least a prediction of a third anchor information and a prediction of a fourth anchor information, wherein the third anchor information and the fourth anchor information are associated with a second individual line (104b) of the at least one image frame (100a), wherein the image compression device (14) is configured to determine the prediction of the third anchor information based on the first anchor information, wherein the image compression device (14) is configured to determine the prediction of the fourth anchor information based on the second anchor information, wherein the image compression device (14) is configured to determine the third anchor information by probing a first probe region (114a) of the second individual line (104b) of the at least one image frame (100a), wherein the first probe region (114a) is based on the prediction of the third anchor information, and wherein the image compression device (14) is configured to determine the fourth anchor information by probing a second probe region (114b) of the second individual line (104b) of the at least one image frame (100a), wherein the second probe region is based on the prediction of the fourth anchor information.

4. The image processing system (10) according to claim 3, wherein the third anchor information and the fourth anchor information define a further intermediate compression region (112b) to be represented in a coded representation.

5. The image processing system (10) according to claim 3 or 4, wherein the image compression device (14) is configured to successively increase a size of the first probe region (114a) and a size of the second probe region (114b), wherein the size of the first probe region (114a) and the size of the second probe region (114b) each corresponds to a successively increasing predetermined number of pixels, and wherein the predetermined number of pixels is a user-adjustable image compression parameter.

6. The image processing system (10) according to claim 5, wherein the image compression device (14) is configured to successively increase the size of the first probe region (114a) and the size of the second probe region (114b) a predetermined number of times, and wherein the predetermined number of times is a further user-adjustable image compression parameter.

7. The image processing system (10) according to one of the claims 3 to 6, wherein the image compression device (14) is configured for determining at least a prediction of a fifth anchor information and a prediction of a sixth anchor information, wherein the fifth anchor information and the sixth anchor information are associated with a third individual line (104c) of the at least one image frame (100a), wherein the image compression device (14) is configured to determine the prediction of the fifth anchor information based on the first anchor information and the third anchor information, and wherein the image compression device (14) is configured to determine the prediction of the sixth anchor information based on the second anchor information and the fourth anchor information.

8. The image processing system (10) according to claim 7, wherein the image compression device (14) is configured to determine a first prediction rule based on a change from the first anchor information to the third anchor information, wherein the image compression device (14) is configured to determine a second prediction rule based on a change from the second anchor information to the fourth anchor information, wherein the image compression device (14) is configured to determine the prediction of the fifth anchor information based on the first prediction rule, and wherein the image compression device (14) is configured to determine the prediction of the sixth anchor information based on the second prediction rule.

9. The image processing system (10) according to one of the claims 2 to 8, wherein the image compression device (14) further comprises an intermediate compression region analyzing unit (24) for analyzing the intermediate compression region (112a) and/or the further intermediate compression region (112b) to obtain a statistical representation of the intermediate compression region (112a) and/or the further intermediate compression region (112b).

10. The image processing system (10) according to one of the claims 2 to 8, wherein the image compression device (14) is configured to determine a linear representation of the intermediate compression region (112a) based on the first anchor information and the second anchor information, and/or wherein the image compression device (14) is configured to determine a linear representation of the further intermediate compression region (112b) based on the third anchor information and the fourth anchor information.

11. The image processing system (10) according to claim 1, wherein the anchor information determination unit (22a) is configured to determine the at least one anchor information in dependence on a user-adjustable image compression parameter, and wherein the user-adjustable image compression parameter comprises the first sampling resolution, the second sampling resolution or the predetermined threshold.

12. The image processing system (10) according to one of the claims 1 to 11, wherein the image compression device (14) further comprises a further anchor information determination unit (22b) for determining at least one additional anchor information by blockwise scanning pixels of successive individual lines (116a - 116p) of the at least one image frame (100a), wherein each block of pixels associated with the successive individual lines (116a - 116p) has a same block size (120), and wherein a first block of pixels (118a) associated with a first individual line (116a) of the at least one image frame (100a) and a second block of pixels (118b) associated with a second individual line (116b) of the at least one image frame (100a) are shifted with respect to each other by a predetermined number of pixels corresponding to the block size (120).

13. The image processing system (10) according to claim 12, wherein the block size (120) of each block of pixels is a user-adjustable image compression parameter.

14. The image processing system (10) according to one of the claims 1 to 13, wherein the image compression device (14) is configured for obtaining a bitstream representing the image data of the at least one image frame (100a), wherein the at least one anchor information is encoded within the bitstream.

15. An image processing method for processing image data of at least one image frame (100a), the image data of the at least one image frame (100a) comprising a plurality of pixels arranged in a two-dimensional array (102), the image processing method comprising:
providing the image data of the at least one image frame (100a),
compressing the image data of the at least one image frame (100a) to obtain compressed image data, and
decompressing the compressed image data to obtain decompressed image data,
**characterized in that** compressing the image data of the at least one image frame (100a) comprises determining at least one anchor information by sampling pixels of at least one individual line (104a) of the at least one image frame (100a),
wherein determining the at least one anchor information comprises sampling the pixels of the at least one individual line (104a) by using a first sampling resolution,
wherein determining the at least one anchor information comprises determining at least one pair of successive pixels (106a, 106b) sampled with the first sampling resolution for which a difference of level values is equal to or exceeds a predetermined threshold (108),
wherein determining the at least one anchor information comprises sampling the pixels of the at least one individual line (104a) in an intermediate sampling region (108) between the pixels of the at least one pair of successive pixels (106a, 106b) sampled with the first sampling resolution by using a second sampling resolution, wherein the second sampling resolution is higher than the first sampling resolution,
wherein determining the at least one anchor information comprises determining the at least one anchor information based on pixels sampled in the intermediate sampling region (108a) with the second sampling resolution,
wherein the compressed image data comprises the at least one anchor information, and
wherein the at least one anchor information comprises a position information, wherein the position information indicates a position of a pixel (110a) in the at least one individual line (104a) where a change of level values of two successive pixels sampled in the intermediate sampling region (108a) with the second sampling resolution is largest.
